# EUROPÄISCHE PATENTSCHRIFT

(11) **EP 1 020 248 B1**
(45) Veröffentlichungstag und Bekanntmachung des Hinweises auf die Patenterteilung: **18.08.2004**
(21) Anmeldenummer: 00200052.9
(22) Anmeldetag: 07.01.2000
(51) Int. Cl.: B23K 26/00

(54) **Verfahren zur Feinabstimmung eines passiven, elektronischen Bauelementes**
Post-treatment method for passive electronic components
Méthode de post-traitement de composants électroniques passifs

(30) Priorität: 16.01.1999 DE 19901540
(43) Veröffentlichungstag der Anmeldung: 19.07.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Löbl, Hans-Peter Harald, 52064 Aachen (DE); Wiechert, Detlef Uwe, 52064 Aachen (DE)
(74) Vertreter: Volmer, Georg, Dipl.-Ing.

(56) Entgegenhaltungen:
- DE-A- 3 843 980
- US-A- 4 839 711
- US-A- 5 685 995

## Beschreibung

Die Erfindung betrifft ein Verfahren zur Feinabstimmung eines passiven, elektronischen Bauelementes, welches wenigstens ein Trägersubstrat und wenigstens eine elektrisch leitende Schicht aufweist, bei dem mittels fokussierter Laseremission örtlich auf die elektrisch leitende Schicht ein Erhitzungseffekt erreicht wird und die elektrisch leitende Schicht örtlich in einen elektrisch nicht leitenden Zustand überführt wird.

Die Entwicklung zahlreicher elektronischer Geräte ist durch folgende Trends gekennzeichnet: Miniaturisierung, höhere Zuverlässigkeit, niedrigere oder zumindest konstante Preise bei zunehmender Funktionalität. Trotz aller Digitalisierungsmaßnahmen macht die Anzahl der passiven Bauelemente erfahrungsgemäß in zahlreichen Geräten der Konsumelektronik, beispielsweise in Fernsehgeräten oder Videorecordern, 70 % der vorhandenen Bauelemente aus. Die fortschreitende Miniaturisierung führt insbesondere dazu, daß Schwankungen in den Ausgangsmaterialien und im Herstellungsprozeß der passiven, elektronischen Bauelemente einen relativ großen Einfluß auf die elektrische Endspezifikation haben.

Mit Hilfe der Dünnschichttechnik, bei der hauptsächlich Aufdampfverfahren und Sputterverfahren zur Abscheidung der elektrisch leitenden Schichten verwendet werden, können beispielsweise Widerstände im Toleranzbereich ± 5 % hergestellt werden. Eine bessere Prozeßbeherrschung bei der Herstellung der passiven, elektronischen Bauelemente verursacht höhere Prozeßkosten.

Eine Möglichkeit, die Herstellungskosten möglichst gering zu halten, stellt die Herstellung von passiven, elektronischen Bauelementen, wie Kondensatoren, Widerstände und Induktivitäten, mit großer Spezifikationsbreite, welche durch korrigierende Nachbehandlungen (Feinabstimmen) auf die gewünschten Endspezifikation eingestellt werden, dar.

Aus DE 38 43 980 ist ein Verfahren zum Feinabstimmen eines Kondensators, der ein lasertransparentes Trägersubstrat, eine untere Elektrode, eine Isolationsschicht und eine obere Elektrode aufweist, mittels Laseremission auf die untere Elektrode bekannt. Durch die Laseremission tritt auf der unteren Elektrode, die aus Aluminium oder Tantal besteht, ein Erhitzungseffekt auf, wodurch das Elektrodenmaterial oxidiert und in einen elektrisch nicht leitenden Zustand überführt wird.

Der Nachteil des beschriebenen Verfahrens liegt darin, daß die verwendeten Metalle Aluminium und Tantal die Anwendung des beschriebenen Verfahrens auf Kondensatoren beschränkt, da sich diese Metalle aufgrund ihres niedrigen spezifischen Widerstandwertes beispielsweise nicht zur Realisierung von Widerständen eignen.

Der Erfindung liegt die Aufgabe zugrunde ein generelles Verfahren zu entwickeln, mit dem die Feinabstimmung der elektronischen Endspezifikation von verschiedensten passiven, elektronischen Bauelementen erfolgen kann.

Diese Aufgabe wird durch ein Verfahren zur Feinabstimmung eines passiven, elektronischen Bauelementes, welches wenigstens ein Trägersubstrat und wenigstens eine elektrisch leitende Schicht aufweist, bei dem mittels fokussierter Laseremission örtlich auf die elektrisch leitende Schicht ein Erhitzungseffekt erreicht wird und die elektrisch leitende Schicht örtlich in einen elektrisch nicht leitenden Zustand überführt wird, dadurch gelöst, daß die elektrisch leitende Schicht ein Material mit einem leitenden Nitrid oder einem leitenden Oxynitrid oder einem Halbleiter oder Chrom enthält, welches durch den Erhitzungseffekt in ein örtlich elektrisch nicht leitendes Material überführt wird.

Dieses Verfahren unter Verwendung der oben genannten Materialien als elektrisch leitende Schichten hat den Vorteil, daß die Feinabstimmung der elektrischen Endspezifikation ohne Materialabtrag erfolgt und somit auch noch nach Einbau des Bauelementes in eine elektrische Schaltung möglich ist.

Es kann bevorzugt sein, daß als passives, elektronisches Bauelement ein Widerstand abgestimmt wird.

Mit Hilfe des eingangs beschriebenen Verfahrens ist es möglich, präzise einen gewünschten Widerstandsnennwert einzustellen. Dabei kann ein sehr kleiner Toleranzbereich von 1 % und besser erreicht.

Es kann bevorzugt sein, daß als passives, elektronisches Bauelement ein Kondensator, welcher wenigstens zwei elektrisch leitende Schichten und wenigstens ein Dielektrikum aufweist, abgestimmt wird.

Da die Größe der Kapazität eines Kondensators unter anderem von der effektiven Fläche der leitenden Schichten, der Elektroden, abhängt, kann durch Verkleinerung der Fläche der leitenden Schichten auch die Kapazität des Kondensators abgestimmt werden.

Es kann bevorzugt sein, daß als passives, elektronisches Bauelement eine Induktivität abgestimmt wird.

Der Induktivitätswert kann durch Veränderung der Linienbreite und somit des Abstandes der Linien eingestellt werden.

Es kann weiterhin bevorzugt sein, daß das passive, elektronische Bauelement wenigstens eine erste und eine zweite Stromzuführung aufweist.

An den Stromzuführungen kann jedes passive, elektronische Bauelement mit weiteren Bauelementen eines Schaltkreises oder mit einem Meßgerät zur Bestimmung der elektronischen Endspezifikation gekoppelt werden.

Im folgenden soll die Erfindung anhand zweier Figuren und zweier Ausführungsbeispiele erläutert werden. Dabei zeigt
- Fig. 1:: eine longitudinal geschnittene Seitenansicht eines Widerstandes, dessen elektrisch leitende Schicht durch eine fokussierte Laseremission modifiziert wird
und
- Fig. 2:: eine longitudinal geschnittene Seitenansicht eines Kondensators, dessen obere elektrisch leitende Schicht durch eine fokussierte Laseremission modifiziert wird.

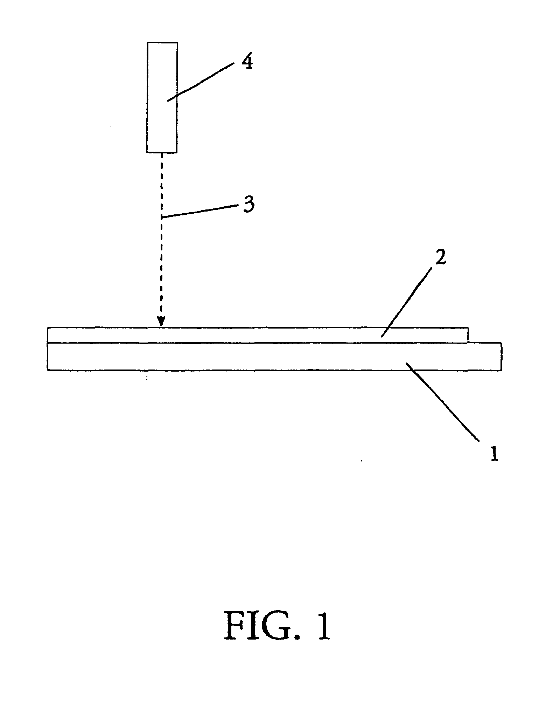

Gemäß Fig. 1 weist ein Widerstand ein Trägersubstrat 1 auf, weiches beispielsweise ein keramisches Material, ein glaskeramisches Material, ein Glasmaterial oder Silicium enthält. Auf dem Trägersubstrat 1 wird eine elektrisch leitende Schicht 2 aufgebracht, welche beispielsweise TiNₓ (0≤ x≤ 1),
TiOₓN_{y} (0 ≤ x ≤ 1, 0 ≤ y ≤ 1),
TiₓW_{y}N_{z} (0 ≤ x ≤ 1,0 ≤ y ≤ 1, 0 ≤ z ≤ 1),
TiᵤWᵥN_{w}Oₓ(0 ≤ u ≤ 1,0 ≤ v ≤ 1,0 ≤w ≤ 1,0 ≤x ≤1),
TaNₓ (0 ≤ x ≤1),
TaOₓN_{y} (0 ≤ x ≤ 1, 0 ≤ y ≤ 1)
CrₓSi_{y}(0 ≤ x ≤ 1, 0 ≤ y ≤ 1),
CrₓSi_{y}O₂ (0 ≤ x ≤ 1, 0 ≤ y ≤ 1, 0 ≤ z ≤ 1),
NiₓCr_{y} (0 ≤ x ≤ 1, 0 ≤ y ≤ 1),
NiₓCr_{y}Al_{z} (0 ≤ x ≤ 1, 0 ≤ y ≤ 1, 0 ≤ z ≤ 1),
SiₓN_{y}O_{z} (0 ≤ x ≤ 1,0 ≤ y ≤ 1,0 ≤ z ≤1),

Si oder Cr enthält. Bevorzugt sind Schichten mit einer Schichtdicke von 10 bis 250 nm. Eine Strukturierung der elektrisch leitenden Schicht 2 zu einer Widerstandsschicht und/oder eine Feinabstimmung des Widerstandnennwertes wird erreicht durch Fokussieren eines Bündels 3 eines Lasers 4 auf die elektrisch leitende Schicht 2, wodurch die elektrisch leitende Schicht 2 durch das Bündel 3 örtlich erhitzt und in einen elektrisch nicht leitenden Zustand überführt wird. Der Laser 4 kann beispielsweise ein Argon-Laser sein.

Zur Kopplung des Widerstandes mit weiteren Elementen eines Schaltkreises oder zum Anschluß an ein Meßgerät zur Bestimmung der elektronischen Endspezifikation können an gegenüberliegenden Seiten des Bauelementes Stromzuführungen angebracht werden.

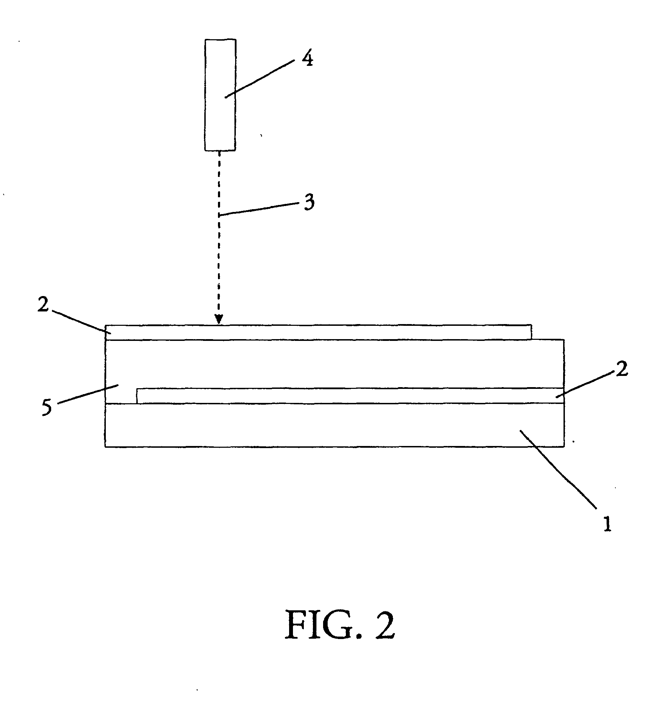

Gemäß Fig. 2 weist ein Kondensator ein Trägersubstrat 1 auf, welches beispielsweise ein keramisches Material, ein glaskeramisches Material, ein Glasmaterial oder Silicium enthält. Auf dem Trägersubstrat 1 wird eine elektrisch leitende Schicht 2 aufgebracht, welche beispielsweise TiNₓ (0 ≤ x ≤ 1),
TiOₓN_{y} (0 ≤ x ≤ 1, 0 ≤ y ≤ 1),
TiₓW_{y}N_{z} (0 ≤ x ≤ 1,0 ≤ y ≤ 1, 0 ≤ z ≤ 1),
TiᵤWᵥN_{w}Oₓ (0 ≤ u ≤ 1,0 ≤ v ≤ 1,0 ≤ w ≤ 1,0 ≤ x ≤ 1),
TaNₓ (0 ≤ x ≤1),
TaOₓN_{y} (0 ≤ x ≤ 1, 0 ≤ y ≤ 1)
CrₓSi_{y} (0 ≤ x ≤ 1, 0 ≤ y ≤ 1),
CrₓSi_{y}O_{z} (0 ≤ x ≤ 1, 0 ≤ y ≤ 1, 0 ≤ z ≤ 1),
NiₓCr_{y} (0 ≤ x ≤ 1,0 ≤ y ≤ 1),
NiₓCr_{y}Al_{z} (0 ≤ x ≤ 1, 0 ≤ y ≤ 1, 0 ≤ z ≤ 1),
SiₓN_{y}O_{z} (0 ≤ x ≤ 1,0 ≤ y ≤ 1,0 ≤ z ≤ 1),

Si oder Cr enthält. Bevorzugt sind Schichten mit einer Schichtdicke von 10 bis 250 nm. Die elektrisch leitende Schicht 2 wird mittels fokussierter Laseremission zu einer Elektrode strukturiert. Auf diese elektrisch leitende Schicht 2 wird eine Dielektrikumschicht 5, welche zum Beispiel aus Si₃N₄ ist, abgeschieden. Auf die Dielektrikumschicht 5 wird eine weitere elektrisch leitende Schicht 2, welche beispielsweise TiNₓ (0 ≤ x ≤ 1),
TiOₓN_{y} (0 ≤ x ≤ 1, 0 ≤ y ≤ 1),
TiₓW_{y}N_{z} (0 ≤ x ≤ 1,0 ≤ y ≤ 1, 0 ≤ z ≤ 1 ),
TiᵤWᵥN_{w}Oₓ(0 ≤ u ≤ 1,0 ≤ v ≤ 1,0 ≤ w ≤ 1,0 ≤ x ≤1),
TaNₓ (0 ≤ x ≤1),
TaOₓN_{y} (0 ≤ x ≤ 1, 0 ≤ y ≤ 1)
CrₓSi_{y} (0 ≤ x ≤ 1,0 ≤ y ≤ 1),
CrₓSi_{y}Oₓ (0 ≤ x ≤ 1,0 ≤ y ≤ 1,0 ≤ z ≤ 1),
NiₓCr_{y} (0 ≤ x ≤ 1, 0 ≤ y ≤ 1),
NiₓCr_{y}Al_{z} (0 ≤ x ≤ 1, 0 ≤ y ≤ 1, 0 ≤ z ≤ 1),
SiₓN_{y}O_{z} (0 ≤ x ≤ 1, 0 ≤ y ≤ 1,0 ≤ z ≤ 1),

Si oder Cr enthält, mit einer bevorzugten Schichtdicke von 10 bis 250 nm abgeschieden, und mittels fokussierter Laseremission zu einer Elektrode strukturiert. Eine Strukturierung der elektrisch leitenden Schicht 2 und/oder eine Feinabstimmung des Kapazitätswertes wird erreicht durch Fokussieren eines Bündels 3 eines Lasers 4 auf die elektrisch leitende Schicht 2, wodurch die elektrisch leitende Schicht 2 durch das Bündel 3 örtlich erhitzt und in einen elektrisch nicht leitenden Zustand überführt wird. Der Laser 4 kann beispielsweise ein Argon-Laser sein.

Zur Kopplung des Kondensators mit weiteren Elementen eines Schaltkreises oder zum Anschluß an ein Meßgerät zur Bestimmung der elektronischen Endspezifikation können an gegenüberliegenden Seiten des Bauelementes Stromzuführungen angebracht werden.

Im folgenden werden Ausführungsformen der Erfindung erläutert, die beispielhafte Realisierungsmöglichkeiten darstellen.

### Ausführungsbeispiel 1:

Mit reaktivem DC-Magnetron-Sputtern wird eine elektrisch leitende Schicht 2 aus TaN mit einer Dicke zwischen 100 und 250 nm auf einem Trägersubstrat 1 aus Borosilikat-Glas erzeugt und mittels fokussierter Laseremission zu einer Widerstandsschicht strukturiert. Anschließend werden an gegenüberliegenden Seiten Endkontakte angebracht. Die Strukturierung der elektrisch leitenden Schicht und/oder eine Feinabstimmung des Widerstandes werden erreicht durch Fokussieren eines Bündels 3 eines Argon-Lasers 4 auf die elektrisch leitende Schicht 2, wobei die elektrisch leitende Schicht 2 durch das Bündel 3 örtlich oxidiert und in einen elektrisch nicht leitenden Zustand überführt wird.

### Ausführungsbeispiel 2:

Auf einem Trägersubstrat 1 aus Glas wird eine elektrisch leitende Schicht 2 aus TiN aufgebracht und durch fokussierte Laseremission zu einer Elektrode strukturiert. Auf dieser elektrisch leitenden Schicht 2 wird eine Dielektrikumschicht 5 aus Si₃N₄ abgeschieden. Auf diese Dielektrikumschicht 5 wird eine weitere elektrisch leitende Schicht 2 aus TiN aufgebracht und durch fokussierte Laseremission zu einer Elektrode strukturiert. Die Strukturierung der elektrisch leitenden Schichten 2 und/oder eine Feinabstimmung des Kapazitätswertes des Kondensators werden erreicht durch Fokussieren eines Bündels 3 eines Argon-Lasers 4 auf die elektrisch leitenden Schichten 2, wobei die elektrisch leitenden Schichten 2 durch das Bündel 3 örtlich oxidiert und in einen elektrisch nicht leitenden Zustand überführt werden.

## Patentansprüche

1. Verfahren zur Feinabstimmung eines passiven, elektronischen Bauelementes, welches wenigstens ein Trägersubstrat (1) und wenigstens eine elektrisch leitende Schicht (2) aufweist, bei dem mittels fokussierter Laseremission örtlich auf die elektrisch leitende Schicht (2) ein Erhitzungseffekt erreicht wird und die elektrisch leitende Schicht (2) örtlich in einen elektrisch nicht leitenden Zustand überführt wird,
**dadurch gekennzeichnet,**
**daß** die elektrisch leitende Schicht (2) ein Material mit einem leitenden Nitrid oder einem leitenden Oxynitrid oder einem Halbleiter oder Chrom enthält, welches durch den Erhitzungseffekt örtlich in ein elektrisch nicht leitendes Material überführt wird.

2. Verfahren nach Anspruch 1,
**dadurch gekennzeichnet,**
**daß** als passives, elektronisches Bauelement ein Widerstand abgestimmt wird.

3. Verfahren nach Anspruch 1,
**dadurch gekennzeichnet,**
**daß** als passives, elektronisches Bauelement ein Kondensator, welcher wenigstens zwei elektrisch leitende Schichten (2) und wenigstens ein Dielektrikum (5) aufweist, abgestimmt wird.

4. Verfahren nach Anspruch 1,
**dadurch gekennzeichnet,**
**daß** als passives, elektronisches Bauelement eine Induktivität abgestimmt wird.

5. Verfahren nach Anspruch 1,
**dadurch gekennzeichnet,**
**daß** das passive, elektronische Bauelement wenigstens eine erste und eine zweite Stromzuführung aufweist.

## Claims

1. A method for the fine tuning of a passive electronic component which comprises at least a carrier substrate (1) and at least one electrically conducting layer (2), in which method a heating effect is achieved locally on the electrically conducting layer (2) by means of focused laser emission, and the electrically conducting layer (2) is locally brough into an electrically non-conducting state,
**characterized in that** the electrically conducting layer (2) comprises a material with a conducting nitride, or a conducting oxynitride, or a semiconductor, or chromium, which material is locally converted into a electrically non-conducting material by the heating effect.

2. A method as claimed in claim 1, **characterized in that** the passive electronic component which is fine-tuned is a resistor.

3. A method as claimed in claim 1, **characterized in that** the passive electronic component which is fine-tuned is a capacitor which comprises at least two electrically conducting layers (2) and at least one dielectric (5).

4. A method as claimed in claim 1, **characterized in that** the passive electronic component which is fine-tuned is an inductance.

5. A method as claimed in claim 1, **characterized in that** the passive electronic component comprises at least a first and a second current supply contact.

## Revendications

1. Procédé de post-traitement d'un composant électronique passif qui comprend au moins un substrat de support (1) et au moins une couche conductrice électriquement (2), un effet de chauffage étant atteint localement sur la couche conductrice électriquement (2) à l'aide d'une émission laser focalisée et la couche conductrice électriquement (2) étant amenée localement dans un état non conducteur électriquement, **caractérisé en ce que** la couche conductrice électriquement (2) contient un matériau avec un nitrure conducteur, un oxynitrure conducteur, un semi-conducteur ou du chrome qui est transformé par l'effet de chauffage localement en un matériau non conducteur électriquement.

2. Procédé selon la revendication 1, **caractérisé en ce qu'**une résistance est réglée comme un composant électronique passif.

3. Procédé selon la revendication 1, **caractérisé en ce qu'**un condensateur qui présente au moins deux couches (2) conductrices électriquement et au moins un diélectrique (5) est réglé comme un composant électronique passif.

4. Procédé selon la revendication 1, **caractérisé en ce qu'**une inductance est réglée comme un composant électronique passif.

5. Procédé selon la revendication 1, **caractérisé en ce que** le composant électronique passif présente au moins des première et deuxième alimentations électriques.
